**Europäisches Patentamt**

**European Patent Office**

**Office européen des brevets**

(11) Numéro de publication : **0 483 017 B1**

(12) # FASCICULE DE BREVET EUROPEEN

(45) Date de publication du fascicule du brevet :
**18.01.95 Bulletin 95/03**

(51) Int. Cl.$^6$ : **H01M 6/52,** H01M 10/54,
C22B 7/00

(21) Numéro de dépôt : **91402869.1**

(22) Date de dépôt : **25.10.91**

(54) **Procédé de récupération du zinc et du mercure dans des piles ou batteries usagées au zinc.**

(30) Priorité : **26.10.90 FR 9013299**

(43) Date de publication de la demande :
**29.04.92 Bulletin 92/18**

(45) Mention de la délivrance du brevet :
**18.01.95 Bulletin 95/03**

(84) Etats contractants désignés :
**BE CH DE DK ES GB IT LI NL**

(56) Documents cités :
**CH-A- 670 015**

(72) Inventeur : **Ferlay, Olivier**
**La Chaussée**
**F-89360 Flogny La Chapelle (FR)**
Inventeur : **Ferlay, Nathalie**
**La Chaussée**
**F-89360 Flogny La Chapelle (FR)**

(74) Mandataire : **Bruder, Michel et al**
**Cabinet Michel Bruder**
**Conseil en Brevets**
**10, rue de la Pépinière**
**F-75008 Paris (FR)**

(73) Titulaire : **Ferlay, Olivier**
**La Chaussée**
**F-89360 Flogny La Chapelle (FR)**
Titulaire : **Ferlay, Nathalie**
**La Chaussée**
**F-89360 Flogny La Chapelle (FR)**

EP 0 483 017 B1

## Description

La présente invention concerne un procédé de récupération du zinc et du mercure dans des piles ou batteries usagées au zinc.

L'art antérieur connaît des procédés de traitement de déchets que constituent les piles usagées faisant appel à du mercure et du zinc, notamment à des amalgames de zinc, dont la toxicité crée un problème considérable pour l'environnement. Ces procédés actuels sont limités à une technique de récupération du mercure, essentiellement par voie sèche, c'est-à-dire par distillation et condensation du mercure. On notera par ailleurs qu'aucun procédé hydrométallurgique n'a atteint le stade industriel. La présente invention a donc pour but de proposer un procédé susceptible de récupérer, avec un rendement et un prix de revient avantageux, aussi bien le mercure que le zinc, tout en s'adaptant, notamment grâce à des variantes, à la plupart des piles ou batteries du commerce.

On va rappeler, pour une meilleure compréhension de l'invention, les caractéristiques essentielles des piles ou batteries alcalines faisant appel au zinc et les plus courantes du marché.

a) Les piles connues sous le nom "LECLANCHE" sont les piles sèches les plus courantes. Elles sont constituées par une enveloppe de zinc utilisée comme anode et amalgamée sur la face interne du contenant ; l'électrolyte est une pâte d'amidon imbibée de chlorure de zinc et d'ammonium et d'eau ; la cathode est constituée de bioxyde de manganèse mélangé à du noir de carbone et entourant un collecteur de carbone. Dans ce type de pile, 20 à 30% du zinc est utilisé et par conséquent oxydé.

b) Les piles alcalines proprement dites sont constituées par une enveloppe en acier servant de pôle positif, une cathode en bioxyde de manganèse mélangé à du noir de carbone, une membrane séparatrice en tissu non tissé, un électrolyte constitué par de la potasse saturée en zincate de potassium, une anode en poudre de zinc amalgamée et un collecteur en laiton formant le pôle négatif. On notera que la solution électrolyte de zincate de potassium étant saturée, l'oxyde de zinc précipite lors de la réaction anodique de sorte que la composition de l'électrolyte reste constante.

c) Les piles connues sous le nom "RUBBEN MALLORY" ou "R M" sont composées d'une cathode en oxyde de mercurique mélangé à 5 à 10% de graphite, d'un électrolyte de potasse saturé en zincate de potassium et d'une anode en zinc amalgamée.

Une réalisation très compacte de ces piles est connue sous le nom de piles-boutons.

d) Les piles zinc - argent sont des dérivés des piles "RUBBEN MALLORY" qui viennent d'être décrites, la différence résidant dans le fait que le peroxyde d'argent remplace l'oxyde mercurique.

e) Les piles zinc - air ou piles "FERY" sont constituées par une cathode en carbone poreux adsorbant l'oxygène, un électrolyte constitué par une solution de soude ou de potasse, saturée respectivement en zincate de sodium ou de potassium et contenue dans une pâte ou gel d'amidon, et une anode constituée par une poudre de zinc amalgamée.

A coté des piles zinc - argent citées plus haut sous d) et utilisées dans les piles du type pile-bouton on peut citer également les batteries zinc - argent utilisées notamment sur les véhicules électriques ; dans ces batteries les anodes sont en zinc poreux ou en poudre de zinc frittée, les cathodes sont en argent peroxydé et la séparation entre elles est assurée par une membrane ionique ordinairement cellulosique imbibée d'un électrolyte de potasse saturée en zincate de potassium.

On notera qu'à l'exception des batteries zinc - argent, tous les autres exemples donnés présentent comme point commun une anode en amalgame de zinc et par ailleurs une géométrie le plus souvent cylindrique et toujours définie par des normes nationales ou internationales. Par ailleurs dans la plupart des cas, l'électrolyte est composé de soude et de potasse respectivement saturée en zincate de sodium ou de potassium.

Le procédé conforme à l'invention comprend essentiellement les étapes suivantes :

Après collecte des piles et batteries et leur mise en condition c'est-à-dire généralement leur ouverture ou leur débit en pièces, on procède à une lixiviation basique suivie d'une décantation et d'une électrolyse. Celle-ci permet de recueillir du métal de récupération que l'on lave à l'eau et que l'on sèche pour récupération ou utilisation tandis que d'autre part le reste de la matière électrolysée est soit recyclée pour une nouvelle lixiviation avec, de préférence addition de soude, soit recyclée dans les mêmes conditions mais après une évaporation. Par ailleurs les eaux de lavage peuvent être également recyclées pour une nouvelle lixiviation après neutralisation, par exemple à l'acide chlorhydrique, et filtration pour éliminer des eaux salines.

Dans ce qui suit, on donnera plus de précisions sur ces différentes étapes et en particulier différentes variantes permettant d'obtenir soit le zinc et le mercure séparément soit un amalgame propre à être réutilisé.

Pour mieux faire comprendre les caractéristiques techniques et les avantages de la présente invention, on va en décrire des exemples de réalisation étant bien entendu que ceux-ci ne sont pas limitatifs quant à leur mode de mise en oeuvre et aux applications qu'on peut en faire ; on se référera aux figures suivantes qui représentent schématiquement :

La figure 1, un diagramme du procédé de base conforme à l'invention.

La figure 2, ce même procédé appliqué à la constitution d'un amalgame propre à être réutilisé dans les piles.

La figure 3, une variante du procédé avec récupération séparée de poudre de zinc et de mercure prête à être purifiée.

La figure 4 représente un diagramme d'une variante de celui de la figure 3 avec également récupération de poudre de zinc et de mercure à purifier.

Exemple 1

Récupération de zinc et de mercure sur une pile à air.

On part d'une pile d'environ 6 kg présentant un coeur cylindrique en carbone poreux traversé par un axe en cuivre, un cylindre concentrique au précédent de 1 à 2 cm d'épaisseur constitué d'une pâte d'amidon saturée d'électrolyte (potasse saturée de zincate de potassium) puis un cylindre de poudre de zinc amalgamé imbibé d'électrolyte et enfin à l'extérieur une enveloppe de chlorure de polyvinyle sur laquelle est attaché par points un réseau de fils de cuivre relié au pôle positif de la pile ; sur une telle pile on peut aisément récupérer par le procédé 3 kg humide d'une pulpe de zinc amalgamé comme on va le voir ci-dessous c'est-à-dire approximativement la moitié du poids total de la pile.

En ce qui concerne la composition chimique, elle varie très peu au cours d'une utilisation d'une pile, à l'oxydation du zinc près ; en effet 50 à 55% du zinc métal initial se trouvent oxydés au cours de l'utilisation et si, de plus, la pile est stockée longuement à l'humidité, cette oxydation peut être totale ; dans le tableau ci-après, on donne des valeurs moyennes des teneurs pour des piles usagées du type qui vient d'être décrit et pour la pulpe d'amalgame récupérable.

| METAL | : | PILE USAGEE | : | PULPE D'AMALGAME |
|---|---|---|---|---|
| Eau | : | 25 à 30% | : | 22% |
| Mercure | : | 1 à 1,5% | : | 1,3% |
| Zinc | : | 60 à 62% | : | 27,7% |
| Potassium | : | 5% | : | --- |
| Oxyde de zinc | : | --- | : | 41,6% |
| Potasse | : | --- | : | 7,2% |
| Sodium | : | 0,05% | : | --- |
| Plomb | : | 0,08% | : | --- |

La solution d'électrolyte étant saturée de zincate de potassium, la dissolution du zinc se traduit par une précipitation de l'oxyde de zinc ; on notera, en se reportant à cette analyse chimique, que la potasse en solution est à une concentration de l'ordre de 25% et que le plomb dans le zinc représente environ 0,13%, ce qui illustre le fait que le zinc utilisé dans les piles n'était pas de toute première qualité, ce qui est souvent le cas.

Après avoir récupéré tous les éléments constitutifs de la pile pouvant être soumis (étape 1) à récupération et avoir conditionné ces éléments à la dimension appropriée (étape 2), on procède à une lixiviation alcaline (étape 3) à l'aide de potasse ou de soude. En effet l'oxyde de zinc est soluble en milieu alcalin, alors que l'oxyde de mercure l'est très peu. Par ailleurs zinc et mercure ne sont pas attaqués directement par les lessives alcalines ; on procède donc par cette lixiviation alcaline à une dissolution sélective de l'oxyde de zinc en milieu sodique ou potassique.

Selon un mode de réalisation préféré de l'invention, si l'on procède à la lixiviation à la soude caustique

3

avec des concentrations 250 à 750 g/l de soude dans la solution de lixiviation, cette opération se fait à une température maintenue de préférence entre 95 et 100°C pendant une durée de l'ordre de 15 min à 1 h. L'expérience a montré que la concentration optimale en soude est de l'ordre de 300 g/l. En ce qui concerne la concentration solide, on constate que l'on obtient un rendement massique relativement stable pour une concentration de 40 à 120 g/l mesuré sur amalgame humide ; les meilleurs résultats ont été obtenus avec une concentration en soude de 300 g/l, une concentration solide (sur sec) de 100 g/l, une température de 95 à 105°C par conséquent proche de l'ébullition, et pendant une durée de traitement d'environ 30 min. En ce qui concerne les autres composants de la masse traitée, le zinc métallique restera intact, sauf si l'on se trouve en présence d'oxydant, auquel cas, il se retrouve sous forme de $Z_nO_2^{--}$. L'oxyde de zinc ZnO est soluble dans la soude caustique concentrée à pH approximativement supérieur à 12, sous la forme zincate de sodium soit $NaZnO_2$. La soude ou la potasse sont sans action sur le mercure ; par contre l'oxyde HgO est légèrement soluble, mais cette solubilité est très réduite en présence de zinc métal. Si l'on travaille dans les conditions ci-dessus, on obtient un échantillon approximativement à 28,2% d'humidité, l'échantillon sec présentant les teneurs suivantes :

Zn = 78,2%

Hg = 1,7%

K = 6,5%

Pb = 0,09%

Après décantation (étape 4), on obtient, d'une part un résidu lavé et séché <u>a</u> présentant les teneurs approximatives suivantes :

Zn = 93,3%

Hg = 4,4%

Pb = 0,3%

K = 0,01%

et, d'autre part une solution <u>b</u> à composition suivante :

Zn = 41,5 g/l

Hg = 20 mg/l

Pb = 0,8 mg/l

K = 6,3 g/l

ce qui permet de conclure sur les résultats suivants :

lixiviation du zinc (oxyde de zinc et zincate de potassium), donnant 54,4% sur la solution et 54,5% sur le résidu solide ;

lixiviation du mercure donnant 1,2% sur la solution et 2% sur le résidu solide ;

lixiviation du potassium (potasse et zincate de potassium) donnant 99,6% sur la solution et plus de 99,9% sur le résidu solide ;

lixiviation du plomb donnant 0,9% sur la solution et -27% sur le résidu solide.

Tous ces pourcentages sont donnés par le calcul à partir des résultats des analyses des produits ci-dessus, issus de l'opération de lixiviation ; on peut donc en conclure qu'approximativement sur un échantillon moyen de pile alcaline, la lixiviation du zinc donne de 54 à 55% de zinc, 1% de mercure et 100% du potassium soit un rendement en masse de 70 % de résidu sec sur pulpe humide initiale, 1 kg de pulpe donnant environ 295 g de résidu d'amalgame zinc -mercure. L'expérience a montré que lorsque le zinc a été oxydé presque totalement, notamment lorsque des piles ont été stockées pendant plusieurs années, le rendement masse est proche de 100%, le résidu solide étant quasi inexistant, tandis que le mercure est oxydé à l'attaque caustique et apparaît sous forme d'un hydroxyde en suspension dans la soude caustique. Il est alors facile de le réduire en mercure métal par adjonction de poudre de zinc. Bien que cette réaction soit du type solide - solide, elle est assez rapide puisque, en environ 1/2 heure, elle peut être totale. Les résidus issus de la lixiviation basique (étape 3) ayant été décantés (étape 4), on obtient donc, comme il vient d'être dit ci-dessus, d'une part une solution <u>b</u> et d'autre part un résidu <u>a</u> que l'on peut laver et sécher.

On verra comment ci-après comment traiter l'amalgame résidu ; en ce qui concerne la solution <u>b</u> issue de la décantation (étape 4), on la soumet à électrolyse (étape 5) pour récupération du zinc. L'électrolyse s'effectue dans un électrolyte contenant 250 à 350g/l de soude et de préférence de l'ordre de 300g/l. On électrolyse de préférence la solution en partant d'une concentration en zinc supérieure à 25g/l et de préférence de l'ordre de 35g/l ; en partant de la solution dont la composition été donnée ci-dessus, on parvient ainsi à des particules de zinc dendritiques, légèrement adhérentes à la cathode, dont la composition est de 99,5% en zinc total dont 97,5% de zinc métal, 0,05% de plomb et de 0,01 à 0,05% de mercure. Si l'on désire une poudre ultrafine, par exemple pour une application dans une peinture anticorrosion, on mène l'électrolyse à température ambiante avec une agitation ultrasonique puissante ; si l'on veut du zinc pour pile ou batterie alcaline, c'est-à-dire une poudre assez grossière, on mène l'électrolyse vers 45 à 50°C, de préférence avec une agitation ultrasonique modérée ; si l'on veut une poudre de zinc relativement grossière en vue d'une cémentation, on mène l'électrolyse à une température de l'ordre de 50 à 55°C sans agitation ultrasonique. En fin d'électrolyse, on recueille le zinc, on le lave à l'eau (étape 6) et on sèche (étape 7) pour obtenir une poudre de zinc c ; l'eau de lavage d peut être recyclée en tête de lixiviation basique après neutralisation à l'acide chlorhydrique (étape 8), par exemple 8N, et après filtration (étape 9) et élimination des eaux salines e. En ce qui concerne l'électrolyte f, on peut le recycler en tête de la lixiviation basique après addition de soude (étape 10) et éventuellement après une évaporation intermédiaire (étape 11).

Exemple 2

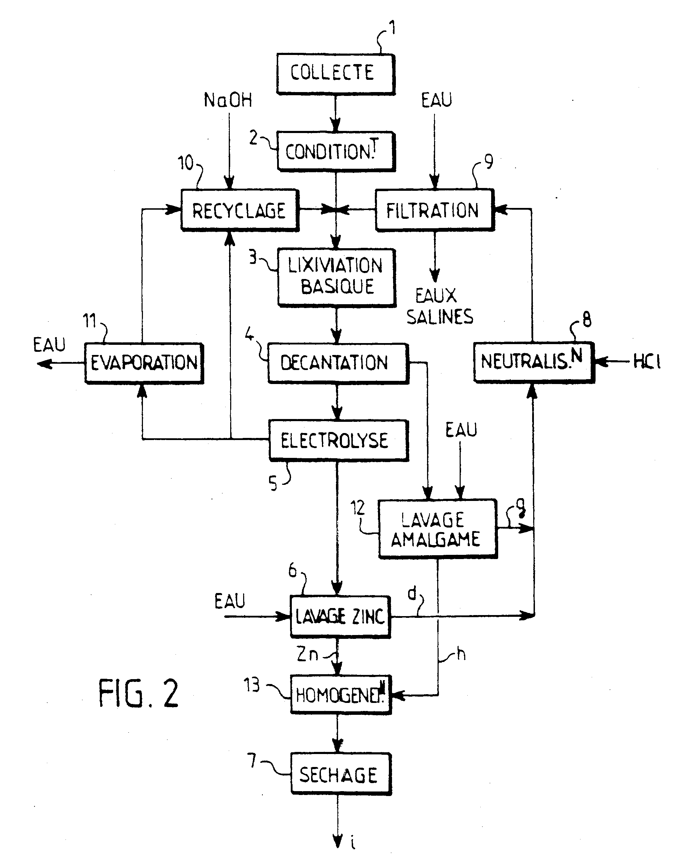

Récupération d'un amalgame (figure 2).

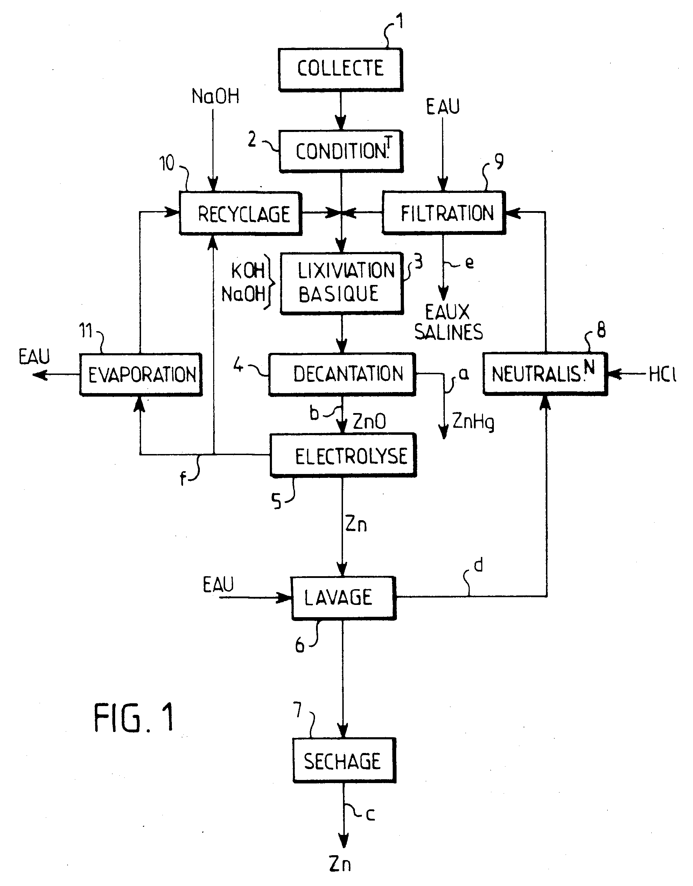

On pratique, comme à l'exemple 1, la récupération du zinc (figure 1) mais avec les modifications suivantes relatives essentiellement au lavage de l'amalgame et à la récupération directe d'un amalgame pour piles.

L'amalgame a issu de la décantation est lavé (étape 12) et l'eau de lavage q peut être recyclée en amont de la lixiviation basique après neutralisation (étape 8), par exemple par HCL, et filtration à l'eau (étape 9), comme dans le cas de l'exemple 1 ; l'amalgame lavé h est ensuite mélangé au zinc lavé et le mélange est homogénéisé (étape 13) puis séché (étape 7), ce qui permet de reconditionner une pulpe i d'anode de piles alcalines en particulier.

Exemple 3

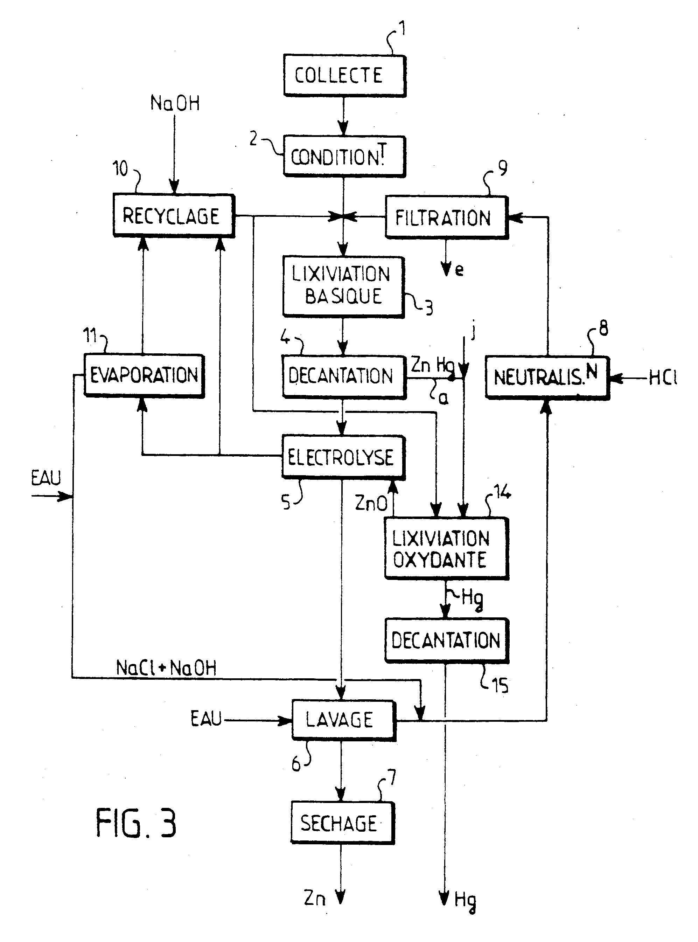

Récupération séparée du zinc et du mercure par lixiviation oxydante (figure 3).

Ce procédé comporte de nombreux points communs avec celui de l'exemple 1, en particulier en ce qui concerne la récupération du zinc qui s'effectue dans les mêmes conditions. En ce qui concerne l'amalgame a récupéré après lixiviation basique (étape 3) et décantation (étape 4), on lui fait subir une deuxième lixiviation (étape 14) à l'aide d'un oxydant j qui peut être, au moins en partie, le bioxyde de manganèse si celui-ci est présent dans le type de pile à traiter ; on utilise toutefois de préférence, comme oxydant, l'eau oxygénée ou encore l'hypochlorite de sodium. Selon une forme préférée de réalisation de l'invention, on utilise l'hypochlorite de sodium à concentration massique de 50% dans la solution ; si l'on part d'un bain avec une concentration en soude de 300g/l, une concentration solide initiale de 20g/l et que l'on traite à une température 20°C pendant 1 heure avec un rapport stoechiométrique de 1,5, l'oxydation du zinc et la désamalgamation du mercure en solution basique s'effectuent de façon optimale en travaillant entre des températures comprises entre 15 à 40°C ; l'oxydation du zinc et la désamalgamation du mercure sont successives, l'oxydation du zinc s'effectuant assez rapidement, pendant une période de l'ordre de 5 à 10 min, tandis que la désamalgamation est plus lente c'est-à-dire pendant 30 à 45 min. Il est souhaitable de travailler sous forte agitation pour limiter la formation d'agglomérats et faciliter la réaction. Le mercure ainsi récupéré, après décantation (étape 15), contient une faible teneur en zinc et pourra donc être purifié ensuite par les méthodes classiques. Le rendement de cette opération en ce qui concerne la solubilisation du zinc est de 99,9% en travaillant dans les conditions ci-dessus indiquées et la récupération du mercure a un rendement de 99,5%. De même qu'au stade de la lixiviation basique la faible solubilité du mercure conduit à une stabilisation de sa concentration dans le solution recyclée et ainsi à une récupération du mercure proche de 100%. On peut renvoyer toute ou partie de la phase liquide $(Zn^O)$ de la lixiviation vers l'électrolyse avec recyclage dans les conditions qui ont déjà été décrites.

Exemple 4

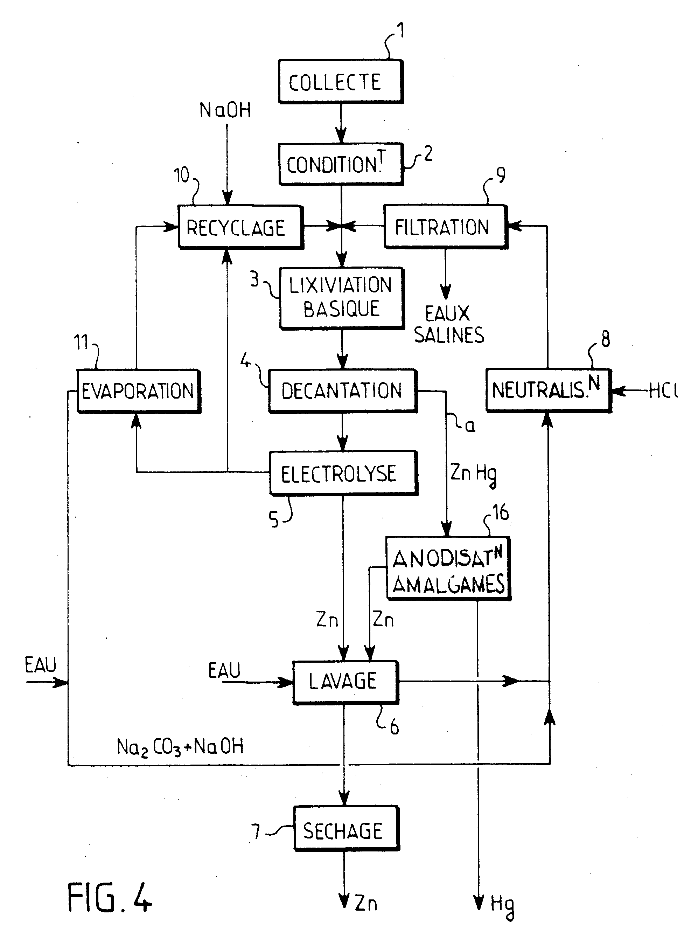

Récupération séparée du zinc et du mercure par anodisation des amalgames (figure 4).

On pratique comme dans le cas de l'exemple 1 notamment en ce qui concerne la récupération de la poudre de zinc ; l'amalgame a issu de la lixiviation basique (étape 3) et de la décantation (étape 4) est soumis à une anodisation (étape 16), ce qui assure la dissolution anodique du zinc dans la soude et ainsi une séparation du zinc et du mercure. On peut travailler par exemple avec un appareillage consistant en une cellule munie de deux cathodes extrêmes en acier inoxydable et d'une anode centrale également en acier inoxydable en forme de panier, équipée d'un tissu filtrant. L'électrolyte est une solution de zincate de sodium de préférence à une concentration de 30 à 40g/l et de soude à 200 à 400g/l de préférence à 300g/l ; on travaille de préférence à une tension continue de l'ordre de 0,4 à 1 V de façon à assurer des densités de courant de 200 à 500 A/m², des résultats particulièrement intéressants ayant été obtenus à 400 A/m² ; on travaille également à une température d'électrolyte de l'ordre de 50°C et l'on peut ajouter à l'amalgame de la poudre de carbone, par exemple à une concentration de 25% en poids de l'amalgame, et/ou du gel d'amidon à une concentration en volume de 50% par rapport à l'amalgame ; ces techniques permettent d'éviter une prise du gâteau et d'améliorer considérablement les résultats. Le rendement d'extraction obtenu est de l'ordre de 95% ; la fraction riche en zinc est alors renvoyée au lavage (étape 6) où elle rejoint celle provenant de l'électrolyse (étape 5) ; après lavage et séchage (étape 7) on obtient la poudre de zinc dans des conditions voisines de celles des exemples précédents. En ce qui concerne le mercure que l'on récupère, on peut ensuite le purifier par les techniques habituelles.

## Revendications

1. Procédé de récupération du zinc et du mercure dans des piles ou batteries usagées au zinc caractérisé par le fait que le contenu desdites piles ou batteries est soumis à une lixiviation basique (3) puis à une décantation (4) donnant d'une part une masse (a) contenant l'amalgame et d'autre part une solution (b) d'oxyde de zinc d'où l'on extrait le zinc par électrolyse (5).

2. Procédé suivant la revendication 1 caractérisé en ce que la lixiviation (3) est effectuée en solution sodique ou potassique de 250 à 750g/l à une température proche de l'ébullition.

3. Procédé selon l'une quelconque des revendications 1 ou 2 caractérisé en ce que la masse d'amalgame (a) issue de la décantation est soumise à lavage (12) et séchage (7).

4. Procédé selon la revendication 3 caractérisé en ce que l'eau de lavage de l'amalgame (d) est neutralisée vers la lixiviation (3).

5. Procédé suivant l'une quelconque des revendications 1 à 4 caractérisé en ce que le zinc issu de l'électrolyse est soumis à lavage (6) et séchage (7).

6. Procédé selon l'une quelconque des revendications 1 à 5 caractérisé en ce que la solution (f) issue de l'électrolyse (5) est recyclée (19) vers la lixiviation (3).

7. Procédé selon la revendication 6 caractérisé en ce que la solution (f) issue de l'électrolyse (5) est soumise à évaporation (11) avant recyclage (10).

8. Procédé selon l'une quelconque des revendications 1 à 7 caractérisé en ce que l'eau de lavage (d) du zinc issue l'électrolyse (5) est jointe à celle (g) de lavage (12) de l'amalgame avant neutralisation (8).

9. Procédé selon l'une des revendications 1 à 8 caractérisé en ce que le zinc et l'amalgame (h) issus du lavage (6,12) sont joints, homogénéisés et séchés (7).

10. Procédé selon l'une quelconque des revendications 1 à 9 caractérisé en ce que la masse (a) contenant l'amalgame issue de la décantation (4) et une partie de celle issue de l'électrolyse sont soumises à lixiviation oxydante (14) la solution qui en résulte étant envoyée vers l'électrolyse (5) et le mercure décanté (15).

11. Procédé selon la revendication 10 caractérisé en ce qu'une partie de la solution issue de l'étape d'évaporation (11) est jointe à l'eau de lavage (6) du zinc issu de l'électrolyse (5), neutralisée (8) à l'acide et filtrée (9) pour recyclage vers la lixiviation basique (3).

12. Procédé selon l'une des revendications 1 à 12 caractérisé en ce que la masse issue de la décantation contenant l'amalgame est soumise à anodisation ce qui sépare zinc et mercure.

## Patentansprüche

1. Verfahren zur Rückgewinnung von Zink und Quecksilber aus gebrauchten Zinkzellen oder -batterien, **dadurch gekennzeichnet,**
daß der Inhalt dieser Zellen oder Batterien einer basischen Auslaugung (3), gefolgt von einer Dekantierung (4) unterzogen wird, woraus sich zum einen eine amalgamhaltige Masse (a) und zum anderen eine Zinkoxidlösung (b) ergeben, aus welcher das Zink mittels Elektrolyse (5) extrahiert wird.

2. Verfahren nach Anspruch 1,
**dadurch gekennzeichnet,**
daß die Auslaugung (3) in einer Natrium- oder Kaliumlösung von 250 bis 750 g/l bei einer Temperatur nahe dem Siedepunkt erfolgt.

3. Verfahren nach einem der Ansprüche 1 oder 2,
**dadurch gekennzeichnet,**
daß die durch die Dekantierung erhaltene Amalgammasse (a) einer Spülung (12) und Trocknung (7) unterzogen wird.

4. Verfahren nach Anspruch 3,
**dadurch gekennzeichnet,**
daß das Wasser zum Ausspülen des Amalgams (d) auf seinem Weg zur Auslaugung (3) neutralisiert wird.

5. Verfahren nach einem der Ansprüche 1 bis 4,
**dadurch gekennzeichnet,**
daß das aus der Elektrolyse erhaltene Zink einer Spülung (6) und Trocknung (7) unterzogen wird.

6. Verfahren nach einem der Ansprüche 1 bis 5,
**dadurch gekennzeichnet,**
daß die aus der Elektrolyse (5) erhaltene Lösung (f) auf seinem Weg zur Auslaugung (3) wiederaufbereitet (10) wird.

7. Verfahren nach Anspruch 6,
**dadurch gekennzeichnet,**
daß die aus der Elektrolyse (5) erhaltene Lösung (f) vor der Wiederaufbereitung (10) einer Verdampfung (11) unterzogen wird.

8. Verfahren nach einem der Ansprüche 1 bis 7,
**dadurch gekennzeichnet,**
daß das Wasser zum Ausspülen (d) des aus der Elektrolyse (5) erhaltenen Zinks vor der Neutralisierung (8) mit dem Wasser (g) zum Ausspülen (12) des Amalgams zusammengeführt wird.

9. Verfahren nach einem der Ansprüche 1 bis 8,
**dadurch gekennzeichnet,**
(6, 12) erhalten wurden, zusammengeführt, homogenisiert und getrocknet (7) werden.

10. Verfahren nach einem der Ansprüche 1 bis 9,
**dadurch gekennzeichnet,**
daß die aus der Dekantierung (4) erhaltene amalgamhaltige Masse (a) sowie ein Teil derjenigen, die aus der Elektrolyse erhalten wurde, einer oxidierenden Auslaugung (14) unterzogen werden, wobei die daraus hervorgehende Lösung zur Elektrolyse (5) sowie zum dekantierten Quecksilber (15) geleitet wird.

11. Verfahren nach Anspruch 10,
**dadurch gekennzeichnet,**
daß ein Teil der aus der Verdampfungsstufe (11) erhaltenen Lösung mit dem Wasser zum Ausspülen (6) des aus der Elektrolyse (5) erhaltenen Zinks zusammengeführt, mit Säure neutralisiert (8) und filtriert (9) wird, um dann auf dem Weg zur basischen Auslaugung (3) wiederaufbereitet zu werden.

12. Verfahren nach einem der Ansprüche 1 bis 12,
**dadurch gekennzeichnet,**
daß die aus der Dekantierung erhaltene amalgamhaltige Masse einer Anodisation unterzogen wird, durch die Zink und Quecksilber getrennt werden.

## Claims

1. Method for recovering zinc and mercury from used zinc cells or batteries, characterized in that the contents of said cells or batteries are subjected to a basic lixiviation (3) then to a decantation (4) giving, on the one hand, a mass (a) containing the amalgam and, on the other hand, a solution (b) of zinc oxide from which the zinc is extracted by electrolysis (5).

2. Method according to Claim 1, characterized in that lixiviation (3) is effected in sodium or potassium solution of from 250 to 750 g/l at a temperature close to boiling.

3. Method according to either one of Claims 1 or 2, characterized in that the mass of amalgam (a) issuing from decantation is subjected to washing (12) and drying (7).

4. Method according to Claim 3, characterized in that the water for washing the amalgam (d) is neutralized towards lixiviation (3).

5. Method according to any one of Claims 1 to 4, characterized in that the zinc issuing from electrolysis is subjected to washing (6) and drying (7).

6. Method according to any one of Claims 1 to 5, characterized in that the solution (f) issuing from electrolysis (5) is recycled (10) towards lixiviation (3).

7. Method according to Claim 6, characterized in that the solution (f) issuing from electrolysis (5) is subjected to evaporation (11) before recycling (10).

8. Method according to any one of Claims 1 to 7, characterized in that the water (d) for washing the zinc issuing from electrolysis (5) is united with that (g) for washing (12) the amalgam before neutralization (8).

9. Method according to one of Claims 1 to 8, characterized in that the zinc and the amalgam (h) issuing from washing (6, 12) are united, homogenized and dried (7).

10. Method according to any one of Claims 1 to 9, characterized in that the mass (a) containing the amalgam issuing from decantation (4) and a part of that issuing from electrolysis are subjected to oxidizing lixiviation (14), the resulting solution being sent towards electrolysis (5) and the mercury decanted (15).

11. Method according to Claim 10, characterized in that a part of the solution issuing from the evaporation step (11) is united with the water for washing (6) the zinc issuing from electrolysis (5), neutralized (8) with acid and filtered (9) for recycling towards basic lixiviation (3).

12. Method according to one of Claims 1 to 12, characterized in that the mass issuing from decantation containing the amalgam is subjected to anodization, which separates zinc and mercury.

FIG. 1

FIG. 2

NaOH

1 — COLLECTE

2 — CONDITION$^T$

10 — RECYCLAGE

9 — FILTRATION

3 — LIXIVIATION BASIQUE

11 — EVAPORATION

4 — DECANTATION          Zn Hg       8 — NEUTRALIS. $^N$ ← HCl
                              a

EAU

5 — ELECTROLYSE          ZnO

j

14 — LIXIVIATION OXYDANTE

Hg

15 — DECANTATION

NaCl + NaOH

EAU → LAVAGE

6

FIG. 3

7 — SECHAGE

Zn          Hg

COLLECTE — 1

NaOH

CONDITION.T — 2

10 — RECYCLAGE    FILTRATION — 9

3 — LIXIVIATION BASIQUE

EAUX SALINES

11 — EVAPORATION

4 — DECANTATION

NEUTRALIS.N — 8 ← HCl

a

Zn Hg

ELECTROLYSE

5

16 — ANODISAT.N AMALGAMES

Zn    Zn

EAU

EAU → LAVAGE — 6

Na₂CO₃ + NaOH

7 — SECHAGE

FIG. 4

↓ Zn    ↓ Hg